# EUROPEAN PATENT APPLICATION

(11) **EP 2 146 535 A1**
(43) Date of publication of application: **20.01.2010**
(21) Application number: 09009148.9
(22) Date of filing: 14.07.2009
(51) Int. Cl.: H04W 16/02

(54) **Method for optimizing downlink and uplink frequency carriers**

(30) Priority: 15.07.2008 ES 200802107
(71) Applicant: Vodafone Group PLC, Newbury Berkshire RG14 2FN (GB); Vodafone España, S.A.U., 28108 Alcobendas, Madrid (ES)
(72) Inventor: Urbano Ruiz, Julio, 28020 Madrid (ES); Dominguez Romero, Francisco, 28020 Madrid (ES); Diaz Mateos, Maria, 28020 Madrid (ES)
(74) Representative: Carvajal y Urquijo, Isabel

(57) **Abstract**

Method and system for optimizing spectrum use in UMTS. The method is implemented in a network spectrum comprising a plurality of downlink and uplink 5 MHz FDD carriers, and optionally, one or more TDD 5 MHz carrier that comprises, different solutions, depending on the different carriers used:
i) The step of combining at least one TDD (time division duplex) carrier to one downlink or uplink FDD (frequency division duplex) carrier, also associated to uplink or downlink FDD carrier respectively; therefore, the TDD carrier would be used as "FDD assist mode".
ii) The step of combining, at least, 2 downlink FDD carriers associated to one uplink FDD carrier.
iii) The step of combining, at least, two uplink FDD carriers associated to one downlink FDD carrier.

## Description

### Technical field of the invention

The object of the present invention is a method for transmitting per cell, in a flexible way, a different number of 5 MHz carriers in downlink and uplink, based on operator's necessities, in order to optimize the spectrum use.

### Background of the invention

For UMTS mobile operators, there is an unbalanced traffic load in downlink and uplink applications. Therefore, the operator is limited in its capacity because only one way of communication is available, normally downlink. Maximizing the download capacity per carrier requires significant investment in the network in terms of hardware (HW) and software (SW).

Mobile operators' live networks are typically implemented as UMTS-FDD, and according to the 3GPP standards, the FDD (frequency division duplex) system is composed of a predetermined number of 5 MHz bands in downlink, and the same number of 5 MHz carrier bands in uplink: each downlink carrier band being paired with a respective uplink carrier band typically separated by 190 MHz or more.

As a result, in unbalanced traffic load, mobile operators are limited in capacity in one communication direction (downlink or uplink) while having spare capacity in the opposite direction. There is no flexibility in UMTS-FDD to allow a different number of 5 MHz carrier bands in downlink and uplink per cell, according to the operator necessities. Each 5 MHz downlink carrier band has to be locked to its associated 5 MHz uplink carrier band.

The other kind of UMTS implementation is the UMTS-TDD. TDD (time division duplex) mode requires only one frequency channel for uplink and downlink: instead, traffic on the uplink is transmitted at separate times from traffic on the downlink. For this reason, a TDD system is often referred to as unpaired spectrum. There are 2 types of UMTS-TDD standardized in 3GPP: TDD-HCR (high chip rate) and TDD-LCR (low chip rate). The UMTS-HCR uses increments of 5MHz of spectrum, 3.84 Mega chips per second (Mcps), and TD-CDMA to multiplex streams. The UMTS-LCR is based on TD-SCDMA, and uses 1.6MHz slices of spectrum and 1.28 Mcps. In many UMTS networks, TDD is not deployed at all and the spectrum set aside for TDD remains unused.

### Summary of the invention

The invention relates to a method for optimizing spectrum use in UMTS according to claim 1, and to a system according to claim 6. Preferred embodiments of the system and of the method are defined in the dependent claims.

The present invention allows transmission on a cell by cell basis and in a flexible way, using a different number of 5 MHz carrier bands in uplink and downlink, based on operator necessities, in order to optimize the spectrum use.

The method, object of the present invention, is implemented in a network spectrum comprising a plurality of downlink and uplink 5 MHz FDD carrier bands, and optionally, one or more TDD 5 MHz carrier bands that comprises, different solutions, depending on the different carriers used:
i) The step of combining at least one TDD (time division duplex) carrier to one downlink or uplink FDD (frequency division duplex) carrier, also associated to uplink or downlink FDD carrier respectively; therefore, the TDD carrier would be used as "FDD assist mode".
ii) The step of combining, at least, 2 downlink FDD carriers associated to one uplink FDD carrier;
iii) The step of combining, at least, two uplink FDD carriers associated to one downlink FDD carrier;

Thus, in case of network congestion in an operator with an unused (or underused) TDD carrier, the TDD carrier band, the downlink FDD carrier band and/or the uplink FDD carrier band may be better utilised in downlink and uplink, by assigning 10 MHz of available downlink (or uplink) frequency and 5 MHz of available uplink (or downlink) frequency for the same carrier.

Indeed, while licences are currently with the assumption that carrier bands must be obtained in "pairs" in order for UMTS-FDD to be able to use the full carrier band assignment.

Other example is the RAN sharing case, in which one operator does RAN sharing with at least one other operator and it can associate 2 DL (downlink) frequencies (one of each operator) with 1 UL (uplink) FDD frequency of the first operator.

The method has the main advantage of providing to mobile operators the option of getting new carriers for downlink or uplink transmission in FDD, and also the possibility of taking advantage of the TDD (and potentially any unmatched FDD band) spectrum currently not used, so it gives to mobile operator huge extra downlink capacity without spectrum use.

In accordance with a further aspect of the present invention there is provided a system for optimizing spectrum use in UMTS. The system comprises processing means configured for assigning different number of carrier bands in uplink and downlink per cell. The processing means, preferably located in an RNC, are configure to carry out the method previously described.

### Brief description of the drawings

The following figure helps to better understand the invention. To the extend that the figure also describes an embodiment of the present invention, this should be understood to represent a non-limiting example:

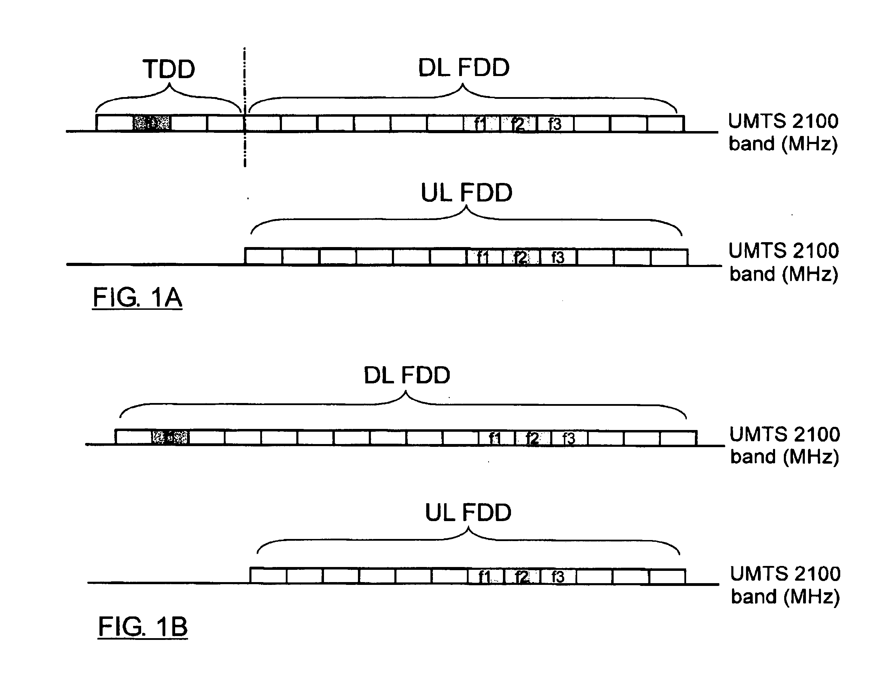

FIGURE 1.- Shows a schematic view of the frequency carriers assignment before the application of the method (figure 1A) and after the application of the method (figure 1B). The TDD carrier is used associated with the f1 of FDD mode (Uplink and Downlink).

### Preferred embodiment of the invention

As can be shown in figure 1A, the method of the present invention is implemented in a network spectrum comprising a plurality of downlink and uplink 5 MHz FDD carrier frequency bands and, optionally, one or more TDD 5 MHz carrier frequency bands.

If there is downlink congestion, the assignment of the frequency bands according to this invention could be as shown in figure 1B. In this example, for one of the FDD carriers, f1, instead of having 5 MHz in DL and 5 MHz in UL, with this solution, mobile operators could have 10 MHz in DL and 5 MHz in UL. This is only an example, as multiple combinations could be made.

For the implementation, in the case of downlink, there will be a "Principal FDD Downlink Frequency" and the rest will be "Complementary FDD Downlink Frequencies", all of them associated to the same UL. The main difference with the normal UMTS FDD operation is the Physical Layer, because with this solution there are asymmetric number of carriers in downlink and uplink.

Related to the Physical Layer, the "Principal FDD Downlink Frequency" will have the same physical channels as in the current UMTS operation defined by the 3GPP standards, and the "Complementary FDD Downlink Frequencies" will be only used for Traffic.

Otherwise, related to the UE behaviour,
- In the Idle Mode: the UE will camp in idle mode in the "Principal FDD Downlink Frequency".
- In dedicated Mode: when the UE establishes a dedicated channel, both, "Principal FDD Downlink Frequency" and "Complementary FDD Downlink Frequencies" can be used with the same Uplink, depending on traffic conditions. The network will inform to the UE about what frequency has to tune in downlink and uplink through the signaling in the Radio Bearer (RB) Setup Message.

In the RB Setup Message the frequency info IE (Information Element) is included. This frequency info IE gives the frequency number for DL (downlink) and UL (uplink), so implementing the invention requires no modification of the 3GPP standards. Therefore, 3GPP standards messages are used, it is not necessary change them.

For the implementation, in the case of uplink, there will be a "Principal FDD Uplink Frequency", and the rest of carriers should be "Complementary FDD Uplink Frequencies", all of them associated to the same DL, and all description above for Physical Layer, UE behaviour and 3GPP standards are applicable to the UL in the same way than to the DL.

## Claims

1. Method for optimizing spectrum use in UMTS, implemented in a network spectrum comprising a plurality of downlink and uplink carrier bands,
**characterized in that** it comprises assigning different number of carrier frequency bands in uplink and downlink per cell.

2. Method according to claim 1, wherein the network spectrum comprises at least one TDD carrier band and a plurality of downlink and uplink FDD carrier bands, and wherein the assignment of different number of carrier bands in uplink and downlink per cell comprises attaching at least one TDD carrier band to one downlink FDD carrier band, which in turn is associated to one uplink FDD carrier band, in such a way that the at least one frequency TDD carrier band and the downlink FDD carrier band are used in downlink.

3. Method according to claim 1, wherein the network spectrum comprises at least one TDD carrier band and a plurality of downlink and uplink FDD carrier bands, and wherein the assignment of different number of carrier bands in uplink and downlink per cell comprises attaching at least one TDD carrier band to one uplink FDD carrier band, which in turn is associated to one downlink FDD carrier band, in such a way that the at least one TDD carrier band and the uplink FDD carrier band are used in uplink.

4. Method according to claim 1, wherein the network spectrum comprises a plurality of downlink and uplink FDD carrier bands, and wherein the assignment of different number of carrier bands in uplink and downlink per cell comprises associating at least two downlink FDD carrier bands with one uplink FDD carrier band.

5. Method according to claim 1, wherein the network spectrum comprises a plurality of downlink and uplink FDD carrier bands, and wherein the assignment of different number of carrier bands in uplink and downlink per cell comprises associating at least two uplink FDD carrier bands with one downlink FDD carrier band.

6. System for optimizing spectrum use in UMTS, wherein the network spectrum comprises a plurality of downlink and uplink carrier frequency bands, **characterized in that** it the system comprises processing means configured for assigning different number of carrier bands in uplink and downlink per cell.

7. System according to claim 6, wherein the network spectrum comprises at least one TDD carrier band and a plurality of downlink and uplink FDD carrier bands, and wherein the processing means are configured to attach at least one TDD carrier band to one downlink FDD carrier band, which in turn is associated to one uplink FDD carrier band, in such a way that the at least one TDD carrier band and the downlink FDD carrier band are used in downlink.

8. System according to claim 6, wherein the network spectrum comprises at least one TDD carrier band and a plurality of downlink and uplink FDD carrier bands, and wherein the processing means are configured to attach at least one TDD carrier band to one uplink FDD carrier band, which in turn is associated to one downlink FDD carrier band, in such a way that the at least one TDD carrier band and the uplink FDD carrier band are used in uplink.

9. System according to claim 6, wherein the network spectrum comprises a plurality of downlink and uplink FDD carrier bands, and wherein the processing means are configured to associate at least two downlink FDD carrier bands with one uplink FDD carrier band.

10. System according to claim 6, wherein the network spectrum comprises a plurality of downlink and uplink FDD carrier bands, and wherein the processing means are configured to associate at least two uplink FDD carrier bands with one downlink FDD carrier band.

11. System according to any of claims 6-10, wherein the processing means are located in an RNC.
